# EUROPEAN PATENT SPECIFICATION

(11) **EP 2 580 307 B1**
(45) Date of publication and mention of the grant of the patent: **22.07.2015**
(21) Application number: 11793112.1
(22) Date of filing: 08.06.2011
(51) Int. Cl.: C10L 9/08, D21C 1/02

(54) **METHODS FOR THE MANUFACTURE OF FUEL PELLETS AND OTHER PRODUCTS FROM LIGNOCELLULOSIC BIOMASS**
VERFAHREN ZUR HERSTELLUNG VON BRENNSTOFFPELLETS UND ANDEREN PRODUKTEN AUS LIGNOZELLULOSE-BIOMASSE
PROCÉDÉS POUR LA FABRICATION DE PASTILLES DE COMBUSTIBLE ET D'AUTRES PRODUITS À PARTIR DE BIOMASSE LIGNOCELLULOSIQUE

(30) Priority: 08.06.2010 US 352579 P
(43) Date of publication of application: 17.04.2013
(73) Proprietor: Zilkha Biomass Technologies LLC, Houston TX 77002 (US)
(72) Inventor: HARRIS, Kenneth, Hillel Peter, N-1384 Asker (NO)
(74) Representative: Nicholls, Michael John
(86) International application number: PCT/US2011/039664
(87) International publication number: WO 2011/156515

(56) References cited:
- WO-A1-2009/058276
- GB-A- 480 772
- JP-A- 2009 280 635
- JP-A- 2009 280 635
- US-A- 5 672 374
- US-A1- 2004 097 369
- US-A1- 2007 084 385
- US-A1- 2008 171 297
- US-A1- 2008 172 933
- US-A1- 2008 293 114
- US-A1- 2009 223 119
- MCMILLAN J D: "Processes for pretreating lignocellulosic biomass: A review", TECHNICAL REPORT, NATIONAL RENEWABLE ENERGY LABORATORY, US, no. NREL/TP-421-4978, 1 November 1992 (1992-11-01), pages 1-48, XP002561745, [retrieved on 1992-01-01]

## Description

### FIELD OF THE INVENTION

The present invention relates generally to a method for making fuel pellets, and more particularly, but not by way of limitation, to a method of making molding compounds and extruded parts, including fuel pellets, from lignocellulosic biomass.

### BACKGROUND OF THE INVENTION

The high price of fossil fuels and the worldwide interest in replacing fossil fuels and products based upon them by others based upon renewable resources. These include extruded parts and moldings that would otherwise be based upon petrochemical derivatives such as thermoplastics and fuel pellets that can be burned in domestic stoves and that can replace coal at power stations.

The best established procedures for making fuel pellets involve compressing biomass in a pelletizing mill to make so-called "white", i.e., light colored pellets, which can be regarded as a more compact energy source than the raw material itself. White pellets need to be made from finely divided biomass, meaning that coarser materials need to be ground before pelletizing, an energy intensive step. The pellets typically contain about 10% moisture and need to be stored under cover, as they absorb water easily and lose their cohesiveness. They are also liable to create dust during transport and storage and thus, risk causing a dust explosion.

Many have attempted to improve the performance of pelletizing mills and of the burners using them and the procedure has been extended from the main source, softwood sawmill waste and sawdust, to cover a wide range of agricultural wastes and forestry materials such as straw, corn stover, deciduous woods, grain husks, nut shells, etc. However, the pellets made from all of these sources suffer from the same shortcomings of those made from sawmill waste.

Thus, whereas pelletized biomass is well established as a fuel for small-scale heating purposes, its shortcomings have made it difficult to use as a straightforward replacement for coal in large-scale installations such as power stations. In such installations, the demand is for a pellet that is easily crushed to a powder and can be stored outdoors. Furthermore, one important quality is that the pellets have a high bulk density to minimize storage requirements and a high specific energy content to minimize freight costs per unit of energy produced. The latter translates into low moisture content.

To meet these requirements, attempts have been made to change the chemical characteristics of the material comprising "white" materials b y incorporating a thermoplastic, or subjecting the feed to medium pressure steam (steam explosion) or partial destructive distillation (torrefaction) before pelletizing in a pellet mill.

The "steam explosion" process entails the use of medium pressure steam to break the bonds between the various components in the feed to form substances that can act as binders. Steam explosion has been used in semi-commercial scale to make fuel pellets in a pellet mill from softwood sawdust.

Torrefaction removes volatiles (which can be burned), and moisture from a feed (which can be a "white" pellet), at the same time converting it to a form that is more easily crushed (although more friable), with a higher energy content per unit weight than the feed upon which it is based. However, this friability means that the process may need to be carried out immediately prior to the pellet being used. These features also make this procedure totally unsuited to the manufacture of extruded and molded parts.

This friability has led to the development of a torrefaction process whereby a "white" pellet is immersed in a hot oil or fat, thereby driving out air, moisture and volatiles and replacing them with the oil or fat. It is claimed that pellets made in this way are much less friable and can be stored outdoors. Torrefaction is not yet employed commercially to manufacture fuel pellets and has never been proposed for the manufacture of extruded or molded products.

It is known in the art to use steam explosion as a method for converting biomass to more uniform products, one example being black pellets used as fuel. One field of use where conventional white pellets are unsatisfactory is where the product needs to be stored outdoors, as is the case for many coal-fired power stations. This requires that the pellets have high strength, i.e., not be prone to breakage during transport, and low water absorption over an extended period. It is also desirable that the product is more easily crushed to a powder than a white pellet.

Steam explosion treatment of biomass, especially of grasses has also been used to manufacture boards and moldings by compression but not extrusion, which requires quite specific conditions.

To this end, although processes of the existing art convert biomass to more uniform products, a need remains for a process for making extruded or molded products, such as, improved pellets and/or briquettes. It is to such a process and pellet that the present invention is directed.

### SUMMARY OF THE INVENTION

The present invention relates to a method for producing fuel pellets and a pellet used as a fuel source prepared by a process as in the appended claims.

Optionally, a catalyst is introduced into the reactor. The catalyst is a fatty acid, ester, or triglyceride. The catalyst is introduced prior to or together with the steam into the reactor.

### DETAILED DESCRIPTION OF THE INVENTION

The present invention is directed to making products from lignocellulosic biomasses by a combination of a steam explosion technique followed by either pelletizing in a mill, briquetting, or by extrusion in a compounding extruder. Such products have unique compositions and considerably better properties, in particular, exceptionally high strength and bulk density and very low water absorption than those made by state-of-the-art steam explosion processes. They are also cheaper to manufacture. Examples of lignocellulosic biomasses are wood chips, sawdust, annual crop residues, etc. It will be understood by those skilled in the art that the present invention may be used to convert any known lignocellulosic biomass into fiber masses or treated biomass suitable for the manufacture of products and extruded products in accordance with the method of the present invention or variations thereof, as described herein.

Patent documents WO 2009/058276 and JP 2009/280635 disclose apparatusses and methods to treat biomass with steam and vacuum, and the products so obtained.

Products made by the present invention are characterized in that at least ten (10) mass percent of the product includes substances, preferably, carbohydrates that are soluble in water at 23°C and at least fifteen (15) mass percent of the product includes lignin, pseudo-lignin, esters and/or resins insoluble in water but soluble in 10% NaOH.

In one embodiment, the biomass is chipped hardwood, softwood or corncobs, where at least 95% of the chips have a smallest dimension of more than 5 mm but less than 15 mm, and are dried to a moisture content of below 30% and preferably below 15%.

In another preferred embodiment, the biomass is an annual crop residue such as that from the grass family (Poaceæ) or from oilseed crops or shredded waste paper which is preferably compacted as pellets or briquettes and dried to a moisture content of below 30% and preferably below 15%.

The dried biomass is transported to a preheated pressure reactor which is evacuated to less than 500 torr and preferably less than 200 torr for a period of at least 1 minute, and not more than 12 minutes. Dry, saturated or slightly superheated steam having a temperature of at least 180°C and not more than 235°C is introduced into the reactor.

In another embodiment, a catalyst chosen from a group of fatty acids, esters or triglycerides (i.e., a vegetable oil such as Jatropha, corn oil, or spent cooking oil), is injected into the evacuated reactor containing the dried biomass immediately prior to or together with the steam in an amount of 1-15% and preferably 2-7% by weight of biomass.

The use of vacuum pretreatment and the optional use of a hydrophobic oil as a catalyst in the present invention provides advantages, including the acceleration of the steam treatment process, which allows the biomass to be converted at lower thermal loading and with a higher degree of conversion to alkali soluble materials, than is the case for state-of-the-art "steam explosion" processes. This saves energy and reduces the dehydration of hemicellulose sugars to furfural derivatives, which are odorous volatiles (VOC's) typically formed in state-of-the-art steam explosion processes.

The biomass is held in the reactor at a selected steam temperature for a period of between 1 and 12 minutes. In preferred embodiment(s), reaction times for grasses and annual crop residues are from 2 minutes at 220°C to 12 minutes at 175°C, from 3 minutes at 225°C to 10 minutes at 190°C, for most hardwood chips; and from 3 minutes at 235°C to 12 minutes at 195°C, for softwood chips.

The biomass is then ejected from the reactor. Where necessary, the degree of saturation of the steam can be adjusted so that the free moisture content of the ejected biomass is below 30% and preferably less than 20%. In the case of production of pellets in a mill, the moisture content is below 12%. Biomass suitable for making the products have a total content of material soluble in 10% NaOH of at least 25% and preferably more than 35%. Of this, at least one-fourth (1/4) and not more than three-fifths (3/5) should also be soluble in water at 23°C.

The biomass can then be transferred, without further drying, to a mill, briquetting machine, or a compounding extruder and pelletized or briquetted, with or without the addition of up to 50% of a finely divided carbon source such as coal, coke dust, or unprocessed biomass, such as sawdust or shredded paper. Up to 10% by weight biomass of a processing aid such as an oil, preferably a vegetable oil or a fat can be added to improve the flow characteristics of the biomass.

Whereas the manufacture of pellets in a mill can follow the prescribed method, it should be noted that the term extrusion is conventionally used to describe any process where pellets are made by forcing biomass through a die. However, the term "extrusion" is used to describe pellets manufactured in connection with a pellet mill and not with a compounding extruder such as employed herein. The use of such an extruder is unique to one embodiment of the method of the present invention.

A conventional extruder meeting the requirements of one embodiment of this invention includes one or two screw conveyors rotating in a barrel equipped with heating elements, one or more compression zones, one or more mixing zones, one or more degassing zones, and a die that can be heated or chilled, having a profile through which the material is extruded. The extruder may also be equipped with a metering device for the addition of a hydrophobic processing aid. It should be understood by one of ordinary skill in the art that a variety of extruders may be utilized so long as the extruder functions in accordance with the present invention as described herein.

Steam-treated biomass is conveyed to a first, heated mixing zone of the extruder where moisture is removed by degassing. A processing aid may then be added and the whole conveyed, while heated to at least 125°C, to the first mixing zone, which may also be heated, and then to a compression zone where it is further compacted in a molten or semi-molten state. The whole is then conveyed, optionally, via a second mixing zone to a second vacuum degassing zone where volatiles are removed before being conveyed to the die zone and converted into pellets.

Products made according to this embodiment have extremely high rigidity, durability, density and energy content and very low water content, typically less than 3% after immersion in water at room temperature for 1 hour.

Products made in accordance with the present invention may optionally contain up to 50% by weight of a finely divided carbon source, such as coal, coke dust, or a biomass such as sawdust that is not steam-treated, as long as the chemical composition of the extruded product falls within the above-mentioned range.

Fuel pellets made according to the method of the present invention have much lower water contents than coal, even after extended outdoor storage, and offer a number of practical advantages as a power station fuel compared to coal and other fossil fuels used in power generation such as coke derived from petroleum (petcoke) or coal.

Apart from the obvious benefit of reducing fossil CO₂ emissions, the flue gas produced by combustion of these pellets is much cleaner than that from coal, coke and heavy fuel oil, being practically free of sulphuric and toxic elements such as arsenic, mercury, vanadium, etc. This means that it does not need to be desulphurized before being released to the environment, a process that typically adds 10% or more to the cost of generating electrical power from fossil fuels as well as creating a product, often regarded as toxic waste, which needs to be dumped accordingly.

Another advantage for these pellets is that the flue gas produced by their combustion is, unlike that from coal, totally free of arsenic, which poisons catalysts that are used to reduce NOₓ levels in power station flue gases. Thus, the combustion of biomass pellets made by the method of this invention leads to a more reliable removal of NOₓ than if coal were to be used.

Furthermore, in one embodiment, the use of venting in a compounding extruder during extrusion allows odorous volatiles such as furfurals and organic acids that may be produced during steam treatment and extrusion, to be removed prior to the product being formed. It should be noted that these odorous components are most undesirable in products such as construction boards and moldings.

The act of evacuating the reactor with a vacuum before the introduction of steam allows the steam and any added catalyst to penetrate more fully the internal structure of the biomass, which makes the energy intensive, size reduction pretreatments used in other techniques, used to convert biomass to fuel pellets, such as grinding or hammer-milling, unnecessary.

In addition, the use of vacuum, optionally together with slightly superheated steam, allows the product to be pelletized immediately after steam treatment without the need for an intermediate drying step. This is one advantage as the steam-treated materials are difficult and expensive to dry to a level optimal for pelletizing (<7%). None of the prior art can meet this requirement without drying.

Fuel pellets made in accordance with the method described here contain biomass that has become embrittled. They are thus easier to grind than white pellets. Compared to the white pellets available in the market, they have much lower moisture contents (typically <2% as opposed to ca. 10%) and therefore, a higher energy content per unit weight and a far lower water absorption. They are also resistant to impact and are, therefore, essentially dust-free.

In a preferred embodiment, the pellet or briquette contain less than 5% moisture, at least 8% and preferably between 10 and 15% of substances soluble in water at 23°C and at least 12%, preferably between 15 and 30%, of substances insoluble in water at 23°C, but soluble in a 10% solution of sodium hydroxide, so that the ratio between the substances soluble only in alkali to those soluble only in water is not less than 1.0 and preferably between 1.3 and 1.7 and the total of both is not less than 20%, preferably at least 25%, of the total dry matter content of the pellet or briquette. Furthermore, pellets or briquettes meeting these specifications contain less than 1% of substances such as furfurals that have objectionable odors and are volatile at between 120°C and 170°C.

"Black" pellets made by the present invention possess considerable advantages compared with similar pellets made in a mill, including lower water content following extended outdoor storage capability, greatly reduced run-off during outdoor storage, considerably higher bulk density and durability and lack of odor.

The fact that it is possible to include finely divided, untreated biomass such as sawdust in steam-treated material made in accordance with the method of this invention while still making pellets of good strength and moisture resistance, allows the energy required to produce a unit weight of pellets to be minimized.

Table 1 illustrates the properties of fuel pellets made according to the methods described herein by steam-treating oak wood chips dried to a moisture content of 15% to a vacuum of 250 torr for 2 minutes in a preheated reactor following which dry steam at 210°C is injected and the whole held at this temperature for 6 minutes before being discharged, dried to 9% moisture and then converted into pellets 6 mm in diameter in a mill die whose die compression length is 8.

**Table 1 THE PROPERTIES OF FUEL PELLETS MADE CONVENTIONALLY AND BY THE METHOD DESCRIBED HERE**

| **Processing** | **MC %¹** | **Energy loss, %²** | **Density kg/cu.m** | **Durability ³ %** | **Energy cont. kWh/kg⁴** | **Leaching loss, %⁵** | **Water content. %⁶** |
|---|---|---|---|---|---|---|---|
| **A. Standard white pellets** | 10 | <1 | 630 | 94 | 4.2 | NA | 30 |
| **B. Black pellets from a mill** | 2 | 1-2 | 750 | 99 | 5.3 | 3.2 | 10 |
| **C. As B. with 30% sawdust** | 5 | 1 | 700 | 97 | 5.1 | 2.7 | 13 |
| **D. Extruded black pellets** | 1 | 1-2 | 860 | 99+ | 5.4 | 0.3 | 2 |
| **E. As D. with 30% sawdust⁷** | 2 | 1 | 790 | 99 | 5.5 | 1.2 | 3 |

| | | | | | | | |
|---|---|---|---|---|---|---|---|
| ¹ Moisture content as made ² As volatile organic compounds during drying and pelletizing ³ According to test method xxx ⁴ As supplied, incl. moisture from manufacturing ⁵ Loss ln DM after immersion in water for 24hrs; NA = Not applicable ⁶ After immersion for 1hr. in water at 23°C ⁷ Including 4% processing aid (corn oil) | | | | | | | |

In one preferred embodiment of the method of the present invention, fuel pellets are produced in a screw conveyor compounding extruder such that the fuel pellets have high energy content, low moisture content and improved strength and crushability with the minimum energy requirement and without needing to dry the steam-treated biomass before pelletizing. In the preferred embodiment, lignocellulosic material, whose smallest dimension (thickness) is not more than 15 mm, is introduced into a reactor. The reactor is evacuated with the lignocellulosic material in the reactor. Dry, saturated or slightly unsaturated steam is injected into the reactor. Optionally, between 1 and 15%, preferably between 2 and 7% by weight biomass of an oil, such as vegetable oil, or fat, is introducted prior to or together with the steam. The saturated steam is injected into the reactor at a temperature not less than 170°C nor higher than 230°C, preferably between 185°C and 215°C. The temperature of the steam depends upon the lignocellulosic material and the total reaction time from introduction of steam to removal of the steam-treated material. The lignocellulosic material is maintained in the reactor not more than 15 minutes, nor less than 2 minutes, preferably between 3 and 10 minutes. The process of the present invention ensures that the steam-treated product is such that the proportion soluble in 10% NaOH is at least 25%, preferably at least 40%, of which at least two-fifths (2/5) is soluble in water at 23°C. The moisture content of the biomass, during steam treatment, is controlled by using a combination of vacuum pretreatment followed by injection of dry or slightly superheated steam such that the steam-treated biomass contains less than 30% by weight and preferably not more than 15% by weight free moisture. The biomass is pelletized in an extruder such that the temperature in the extruder is sufficient to plasticize the biomass, by degassing in one and preferably two stages to remove water vapor and organic volatiles (VOC's), respectively. The pellets have a bulk density of more than 800kg/m³, a moisture content of 3% or less, absorbing less than 3% water after total immersion for 1 hour and losing less than 2% by weight dry matter after immersion in water for 24 hours.

In another embodiment of the invention, extruded products are made using a flat die, in the case of boards with steam-treated materials that can contain as much as 30% or more of thin wood chips, strands or flakes, or in the case of thinner sheets, e.g., for lamination purposes, by the use of steam-treated material containing up to 30% of finely divided biomass that has not been steam-treated.

In another embodiment of the invention, any lignocellulosic material whose smallest dimension (thickness) is not more than 15 mm can be converted into fuel pellets in a pellet mill. The lignocellulosic material is introduced into a reactor. The reactor is evacuated with the lignocellulosic material in the reactor. Dry, saturated or slightly unsaturated steam, whose temperature is not less than 170°C, nor more than 230°C, preferably between 185°C and 215°C, depending upon the feed, is injected into the reactor. Optionally, a catalyst may be added to the reactor as discussed herein. The total reaction time from introduction of steam to removal of the steam-treated material is not more than 15 minutes, nor less than 2 minutes, and preferably between 3 and 10 minutes. The present invention ensures that the steam-treated product is such that the proportion soluble in 10% NaOH is at least 25%, preferably at least 40%, of which at least two-fifths (2/5) is soluble in water at 23°C. The moisture content of the biomass is controlled before and during steam treatment using vacuum pretreatment followed by the injection of dry or slightly superheated steam, such that the steam-treated biomass contains less than 15% by weight and preferably not more than 12% by weight free moisture.

While the description above refers to particular embodiments of the present invention, it will be understood that many modifications may be made. The claims are intended to cover such modifications as would fall within the true scope of the present invention. The presently disclosed embodiments are therefore to be considered in all respects as illustrative and not restrictive, the scope of the invention being indicated by the claims rather than the foregoing description.

## Claims

1. A method for producing fuel pellets, comprising the steps of:
introducing a lignocellulosic biomass having a moisture content of less than about 30% by weight into a reactor;
applying a vacuum to the reactor;
injecting steam having a temperature of between about 180°C and about 235°C into the reactor;
maintaining the biomass in the reactor between about 1 and about 12 minutes;
removing the treated biomass from the reactor; and
forming the treated biomass into a pellet.

2. The method of claim 1 wherein less than about 50 weight% of a carbon source is added to the biomass.

3. The method of claim 2 wherein the carbon source is coal dust, coke powder, or unprocessed biomass.

4. The method of claim 1 wherein the biomass is dried to a moisture content of less than about 15% by weight before the material passes into the reactor.

5. The method of claim 1 wherein the vacuum applied to the reactor is less than 500 torr, more preferably less than 200 torr.

6. The method of claim 1, further comprising the step of introducing a catalyst into the reactor.

7. The method of claim 6 wherein the catalyst is a fatty acid, ester, or triglyceride.

8. The method of claim 6 wherein the catalyst is introduced either:
(a) prior to the steam;
or (b) together with the steam.

9. The method of claim 1 wherein the treated biomass has a moisture content less than about 30% by weight.

10. The method of claim 1, further comprising the step of forming the treated biomass into a pellet, preferably with a compound extruder.

11. A pellet for use as a fuel source, obtainable by a process comprising the steps of:
introducing a lignocellulosic biomass having a moisture content of less than about 30% by weight into a reactor;
applying a vacuum to the reactor;
injecting steam having a temperature of between about 180°C and about 235°C into the reactor;
maintaining the biomass in the reactor between about 1 and about 12 minutes;
removing the treated biomass from the reactor; and
forming the treated biomass into a pellet.

12. The pellet of claim 11 wherein less than about 50 weight% of a carbon source is added to the biomass.

13. The pellet of claim 12 wherein the carbon source is coal dust, coke powder, or unprocessed biomass.

14. The pellet of claim 11 wherein the treated biomass has a moisture content less than about 30% by weight.

15. The pellet of claim 11 obtainable by the method of any one of claims 1 to 10.

## Patentansprüche

1. Verfahren zum Herstellen von Brennstoffpellets, welches die folgenden Schritte umfasst:
Einbringen einer lignocellulosen Biomasse mit einem Feuchtigkeitsgehalt von weniger als etwa 30 Gewichtsprozent, in einen Reaktor;
Erzeugen eines Vakuums in dem Reaktor;
Einleiten von Dampf mit einer Temperatur zwischen etwa 180°C und etwa 235°C in den Reaktor;
Belassen der Biomasse in dem Reaktor zwischen etwa einer Minute und etwa zwölf Minuten;
Entfernen der behandelten Biomasse aus dem Reaktor; und
Formen der behandelten Biomasse zu einem Pellet.

2. Verfahren nach Anspruch 1, wobei weniger als etwa 50 Gewichtsprozent einer Kohlenstoffquelle zu der Biomasse gegeben werden.

3. Verfahren nach Anspruch 2, wobei die Kohlenstoffquelle Kohlestaub, Kokspulver oder unverarbeitete Biomasse ist.

4. Verfahren nach Anspruch 1, wobei die Biomasse zu einem Feuchtigkeitsgehalt von weniger als etwa 15 Gewichtsprozent getrocknet wird, bevor das Material in den Reaktor übergeht.

5. Verfahren nach Anspruch 1, wobei das im Reaktor erzeugte Vakuum weniger als 500 Torr hat, vorzugsweise weniger als 200 Torr hat.

6. Verfahren nach Anspruch 1, ferner den Schritt des Einbringens eines Katalysators in den Reaktor umfassend.

7. Verfahren nach Anspruch 6, wobei der Katalysator eine Fettsäure, ein Ester oder ein Triglycerid ist.

8. Verfahren nach Anspruch 7, wobei der Katalysator entweder (a) vor dem Dampf;
oder (b) zusammen mit dem Dampf eingeleitet wird.

9. Verfahren nach Anspruch 1, wobei die behandelte Biomasse einen Feuchtigkeitsgehalt von weniger als etwa 30 Gewichtsprozent hat.

10. Verfahren nach Anspruch 1, ferner den Schritt des Formens der behandelten Biomasse zu einem Pellet, vorzugsweise mit einem Verbundextruder, umfassend.

11. Pellet für den Einsatz als Kraftstoffquelle, das mit einem Verfahren herstellbar ist, welches die folgenden Schritte umfasst:
Einbringen einer lignocellulosen Biomasse mit einem Feuchtigkeitsgehalt von weniger als etwa 30 Gewichtsprozent, in einen Reaktor;
Erzeugen eines Vakuums in dem Reaktor;
Einleiten von Dampf mit einer Temperatur zwischen etwa 180°C und etwa 235°C in den Reaktor;
Belassen der Biomasse im Reaktor zwischen etwa einer Minute und etwa zwölf Minuten;
Entfernen der behandelten Biomasse aus dem Reaktor; und
Formen der behandelten Biomasse zu einem Pellet.

12. Pellet nach Anspruch 11, wobei weniger als etwa 50 Gewichtsprozent einer Kohlenstoffquelle zu der Biomasse gegeben werden.

13. Pellet nach Anspruch 12, wobei die Kohlenstoffquelle Kohlestaub, Kokspulver oder unverarbeitete Biomasse ist.

14. Pellet nach Anspruch 11, wobei die behandelte Biomasse einen Feuchtigkeitsgehalt von weniger als etwa 30 Gewichtsprozent hat.

15. Pellet nach Anspruch 11, das mit einem Verfahren nach einem der Ansprüche 1-10 herstellbar ist.

## Revendications

1. Procédé de fabrication de pastilles de combustible, comprenant les étapes suivantes :
introduction d'une biomasse lignocellulosique présentant une teneur en humidité de moins d'environ 30 % en poids, dans un réacteur;
application d'un vide au réacteur;
injection de vapeur ayant une température comprise entre environ 180 °C et environ 235 °C, dans le réacteur;
maintien de la biomasse dans le réacteur entre environ 1 et environ 12 minutes;
retrait de la biomasse traitée du réacteur; et
formage de la biomasse traitée pour obtenir une pastille.

2. Procédé selon la revendication 1, selon lequel moins d'environ 50 % en poids d'une source de carbone sont ajoutés à la biomasse.

3. Procédé selon la revendication 2, selon lequel la source de carbone est du poussier de charbon, de la poudre de coke ou de la biomasse non traitée.

4. Procédé selon la revendication 1, selon lequel la biomasse est séchée jusqu'à une teneur en humidité de moins d'environ 15 % en poids, avant que la matière ne passe dans le réacteur.

5. Procédé selon la revendication 1, selon lequel le vide appliqué au réacteur est inférieur à 500 torrs, de préférence inférieur à 200 torrs.

6. Procédé selon la revendication 1, comprenant en outre l'étape d'introduction d'un catalyseur dans le réacteur.

7. Procédé selon la revendication 6, selon lequel le catalyseur est un acide gras, un ester ou un triglycéride.

8. Procédé selon la revendication 6, selon lequel le catalyseur est introduit soit :
(a) avant la vapeur;
soit (b) en même temps que la vapeur.

9. Procédé selon la revendication 1, selon lequel la biomasse traitée présente une teneur en humidité de moins d'environ 30 % en poids.

10. Procédé selon la revendication 1, comprenant en outre l'étape de formage de la biomasse traitée pour obtenir une pastille, de préférence avec une extrudeuse à deux étages.

11. Pastille destinée à être utilisée comme source de combustible, pouvant être obtenue par un processus comprenant les étapes suivantes :
introduction d'une biomasse lignocellulosique présentant une teneur en humidité de moins d'environ 30 % en poids, dans un réacteur;
application d'un vide au réacteur;
injection de vapeur ayant une température comprise entre environ 180 °C et environ 235 °C, dans le réacteur;
maintien de la biomasse dans le réacteur entre environ 1 et environ 12 minutes;
retrait de la biomasse traitée du réacteur; et
formage de la biomasse traitée pour obtenir une pastille.

12. Pastille selon la revendication 11, dans laquelle moins d'environ 50 % en poids d'une source de carbone sont ajoutés à la biomasse.

13. Pastille selon la revendication 12, dans laquelle la source de carbone est du poussier de charbon, de la poudre de coke ou de la biomasse non traitée.

14. Pastille selon la revendication 11, dans laquelle la biomasse traitée présente une teneur en humidité de moins d'environ 30 % en poids.

15. Pastille selon la revendication 11, pouvant être obtenue par le procédé selon l'une quelconque des revendications 1 à 10.
